Europäisches Patentamt

European Patent Office

Office européen des brevets

(11) Numéro de publication : **0 378 496 B1**

(12)

# FASCICULE DE BREVET EUROPEEN

(45) Date de publication du fascicule du brevet :
**23.12.92 Bulletin 92/52**

(51) Int. Cl.⁵ : **F16B 7/00, E01F 13/00**

(21) Numéro de dépôt : **90440001.7**

(22) Date de dépôt : **08.01.90**

(54) **Système de liaison et de blocage de tubulures coaxiales.**

(30) Priorité : **10.01.89 FR 8900350**

(43) Date de publication de la demande :
**18.07.90 Bulletin 90/29**

(45) Mention de la délivrance du brevet :
**23.12.92 Bulletin 92/52**

(84) Etats contractants désignés :
**AT BE CH DE DK ES GB GR IT LI LU NL SE**

(56) Documents cités :
**DE-A- 2 309 249**
**DE-C- 536 003**
**FR-A- 2 297 344**
**GB-A- 960 290**

(73) Titulaire : **S.A. GUILLET**
**27 Route d'Eckbolsheim**
**F-67380 Lingolsheim (FR)**

(72) Inventeur : **Guillet, Gilles**
**2 Rue Lamartine**
**F-67380 Lingolsheim (FR)**

(74) Mandataire : **Bossard, Jacques-René**
**Cabinet MEYER & COURTASSOL Bureau**
**EUROPE 20 Place des Halles**
**F-67000 Strasbourg (FR)**

EP 0 378 496 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un système de liaison et de blocage pour tubulures coaxiales, et plus particulièrement un tel système comportant des moyens pour commander le blocage et/ou le déblocage d'un tube par rapport à un autre, destiné à être appliqué par exemple aux lisses des barrières de sécurité mobiles.

Dans la plupart des cas, ce genre de barrière est employé pour contenir la foule dans le cadre de manifestations de masse, telles que meetings politiques, défilés, concerts etc...

Actuellement, on utilise des barrières transformables en métal, acheminées sur les lieux de la manifestation et posées les unes à côtés des autres. Il est possible de les fixer les unes aux autres, mais la rigidité obtenue laisse à désirer. Au surplus, la forme de ces barrières, notamment au niveau de la lisse sur laquelle les spectateurs prennent appui, les rend dangereuses en cas de bousculades et lorsqu'il se produit des mouvements de foule incontrôlés générant de fortes pressions susceptibles de déplacer des éléments les uns par rapport aux autres.

En matière de sécurité, le point essentiel réside dans la conception de la lisse, car elle doit contenir la majeure partie des efforts considérables produits par une foule compacte qui se presse contre les barrières mobiles. Il est impératif qu'elle assure une bonne rigidité, et que sa forme soit telle qu'elle ne soit pas dangereuse pour un spectateur qui est plaqué contre elle par la foule en mouvement.

En outre, les personnes retenues par la barrière ne doivent pas pouvoir démonter elles-mêmes un élément de ladite barrière, pour des raisons évidentes tenant autant à la fonction de celle-ci qu'à la sécurité des gens.

Le système selon la présente invention permet de réaliser ces objectifs car il présente l'avantage de combiner une forme garantissant une sécurité maximale avec des caractéristiques techniques compatibles avec les efforts à contenir. Les tubulures formant la lisse sont reliées de telle sorte que celles-ci soit continues, quasi uniformes, et que les efforts soient répartis optimalement le long de la barre d'appui supérieure.

Il existe dans l'art antérieur des systèmes dont les tubulures son reliées par des manchons cylindriques de liaison, permettant la solidarisation des tubulures entre elles. En particulier, le brevet anglais GB-A-960 290 décrit un tel type de liaison. Cependant, il s'agit d'un simple manchon cylindrique partiellement enfoncé à l'aide d'un outil spécial sur l'une des extrémités d'une tubulure, et dont la partie non enfoncée sert de réceptacle à l'extrémité d'une seconde tubulure. De la sorte, les deux tubulures sont bout à bout, et elles sont bien solidarisées l'une à l'autre.

Plus précisément, ce manchon cylindrique de liaison décrit dans le brevet britannique a un diamètre intérieur pratiquement égal au diamètre extérieur des tubulures, de sorte que la tolérance d'ajustement soit nécessaire et suffisante pour que la solidarisation avec la tubulure ait lieu. L'outil qui sert à positionner les deux pièces l'une part rapport à l'autre comprend une portion cylindrique de diamètre extérieur sensiblement égal à celui des tubulures, mais dont la longueur est moitié moindre de celle du manchon. A ce niveau, un épaulement marque le commencement d'une seconde partie de diamètre supérieur et de longueur à peu près égale à celle du premier tronçon.

Lorsque ledit outil est inséré dans le manchon, seule la moitié de celui-ci est encore disponible pour la tubulure. L'outil est en butée sur le manchon grâce à l'épaulement, et c'est par lui que l'on peut exercer une pression destinée à positionner le manchon sur la tubulure, laquelle pénètre dans ledit manchon jusqu'à arriver en butée sur l'extrémité de la partie de plus petit diamètre de l'outil.

On peut alors retirer ledit outil. La place restante est occupée par la seconde tubulure, qui peut pénétrer dans le manchon selon une distance équivalente à la longueur de pénétration de la première tubulure.

Selon une autre configuration possible, les extrémités des tubulures et le manchon sont filetés.

Ce système de l'art antérieur ne présente toutefois aucune des spécificités requises précédemment : on peut démonter les manchons de l'extérieur, même lorsque les barrières sont montées, ce qui rend ce système impropre à l'utilisation comme barrière de sécurité pour des spectacles, réunions etc...

A l'inverse, le dispositif de l'invention est particulièrement conçu pour empêcher tout démontage lorsque la barrière de sécurité est montée, grâce à un mécanisme interne aux tubulures à assembler.

A cet effet, le système de l'invention comporte un manchon de recouvrement des deux extrémités des tubulures à assembler, manchon qui est relié mécaniquement à l'une des tubulures par rapport à laquelle il peut être déplacé en translation, ledit manchon étant solidarisé à un ensemble d'éléments mobiles en translation rectiligne selon l'axe des tubulures et comportant un moyen de commande du mouvement et de la position du manchon se situant par exemple à l'autre extrémité de ladite tubulure, ces éléments mobiles en translation étant une tige filetée vissée dans un écrou solidaire de la tubulure par le biais d'une rondelle fixée à celle-ci, la liaison avec le manchon étant effectuée grâce à une entretoise solidaire dudit manchon et montée libre en rotation autour de la vis.

Ce système est un moyen très général de solidariser des tubulures les unes aux autres, étant bien entendu que la fixation n'a pas d'effets axiaux, mais agit essentiellement contre les efforts de flexion. Il s'agit d'un blocage qui n'est pas destiné à travailler en traction. L'application aux barrières de sécurité ne représente qu'une application possible mais le cas d'espèce est particulièrement représentatif dans la mesure où les tubulures servant de lisse sont soutenues par une structure reposant sur le sol, où chaque barrière est encadrée par un ou deux éléments identiques, et surtout parce que les contraintes subies sont essentiellement radiales. Pour ce cas de figure, le poids de l'ensemble posé sur le sol suffit à s'opposer aux contraintes axiales, assez faibles.

Dans cet usage, il est bien évident que les spectateurs contenus par les barrières ne peuvent avoir accès au système de commande permettant de désolidariser les barrières entres elles. C'est pourquoi, chaque organe de commande se situe à l'intérieur du tube, de sorte que l'on ne peut démonter un ensemble de barrières fixées les unes aux autres qu'en un seul emplacement situé à l'extrémité de la barricade ainsi constituée. Au surplus, et préférentiellement, l'organe de commande est manipulé à l'aide d'un outil, spécifique ou non.

On va maintenant décrire une configuration possible de l'invention, en se référant aux dessins présentés en annexe, pour lesquels:
- La figure 1 représente une coupe longitudinale du système,
- La figure 2 montre une coupe transversale, et
- La figure 3 donne un exemple d'application comportant plusieurs barrières de sécurité mobiles assemblées grâce au système de l'invention.

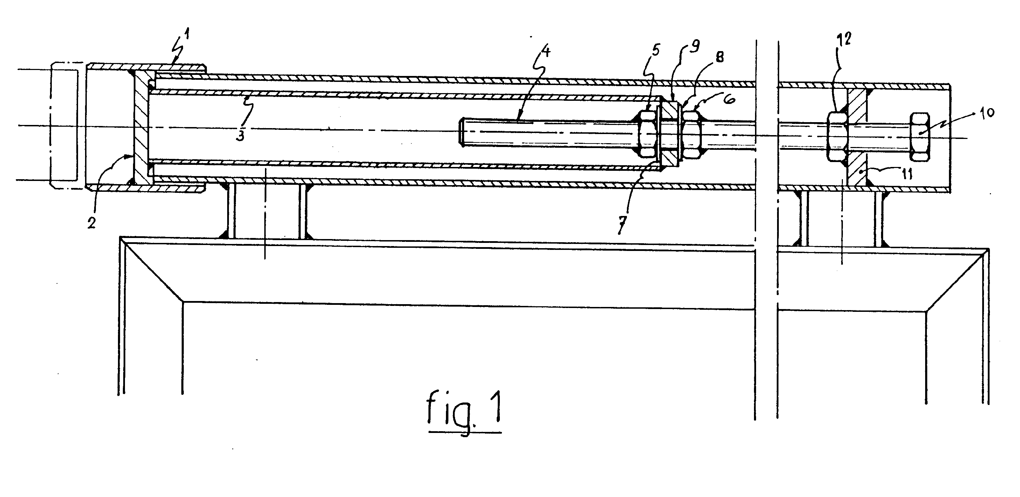

Suivant une conception possible, représentée en figure 1, le manchon de blocage (1) comporte une bague (2) fixée à un emplacement décalé vers l'extrémité libre, servant d'une part de butée pour les tubulures et d'autre part d'assise de fixation pour une entretoise (3) de liaison. Le décalage s'explique par le fait suivant : lorsque le manchon a effectué sa course maximale, il doit nécessairement reposer sur une certaine surface de la tubulure à laquelle il est relié, afin que sa portée ne soit pas disproportionnée aux efforts latéraux qu'il doit pouvoir encaisser.

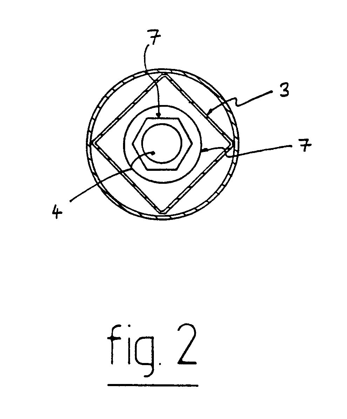

La bague interne (2) est reliée rigidement à une entretoise à section carrée 3 (figure 2), par exemple par soudage. La section carrée présente l'avantage d'avoir des surfaces extérieures de contact avec l'intérieur du tube qui sont réduites au minimum. Théoriquement, les quatre zones de contacts sont linéaires, les lignes étant parallèles à l'axe longitudinal, d'ailleurs pratiquement confondues avec les génératrices du cylindre interne. De ce fait, les frottement axiaux sont très restreints alors que la fonction de guidage est assurée.

L'extrémité de l'entretoise non fixée au manchon est reliée à une tige filetée (4) par le biais d'une liaison à écrous et rondelles (5, 6, 7 et 8). Elle est par exemple soudée à une pièce d'extrémité (9) percée d'un trou dont le diamètre interne est supérieur au diamètre externe du filetage de la tige (4). Les deux écrous (5,6) sont soudés sur cette tige (4), de telle sorte que la bague (9) soit libre en rotation.

Toutefois on peut prévoir que les zones de contact entre l'entretoise et le cylindre interne de la tubulure soient telles que les frottements tangentiels suffisent à empêcher la rotation de l'entretoise (3) et par conséquent celle du manchon (1). Lorsqu'on commande le mouvement du manchon (1), celui-ci se déplace suivant une simple translation, ce qui facilite la liaison avec le tube suivant puisque les frottements n'ont qu'une composante axiale.

La tige filetée est en fait, dans cette configuration, une vis à tête hexagonale (10). Cette vis (4) transforme l'énergie rotative communiquée à sa tête en énergie translative de la manière suivante : une rondelle épaisse (11) obstrue la tubulure à une distance un peu supérieure à la longueur possible de la course du manchon. Cette rondelle est taraudée de façon à pouvoir recevoir la vis (4), un écrou (12) correspondant au filetage de la vis étant en outre soudé à ladite rondelle (11) de façon à augmenter la stabilité et la rigidité du montage, en augmentant corrollairement la longueur filetée du taraudage réel.

Dans cet exemple de configuration, le moyen de commander le mouvement de translation du manchon est simplement constitué de la tête de vis hexagonale. Il faut donc en plus disposer d'une clé correspondante, afin d'opérer un écartement ou un rapprochement du manchon par rapport à la tubulure déjà fixée à la précédente.

Bien entendu, on peut imaginer d'autres modes de conception du système selon l'invention, pour d'autres types de tubulures ou pour des applications différentes. Ainsi, le dispositif à vis filetée n'est qu'un moyen parmi d'autres d'arriver à transformer un mouvement circulaire en un mouvement rectiligne. De même, on peut imaginer d'autres types de commandes, placées à des endroits variables. L'exemple donné précédemment n'est qu'une illustration possible, et ne peut être considéré comme une limitation apportée à l'invention.

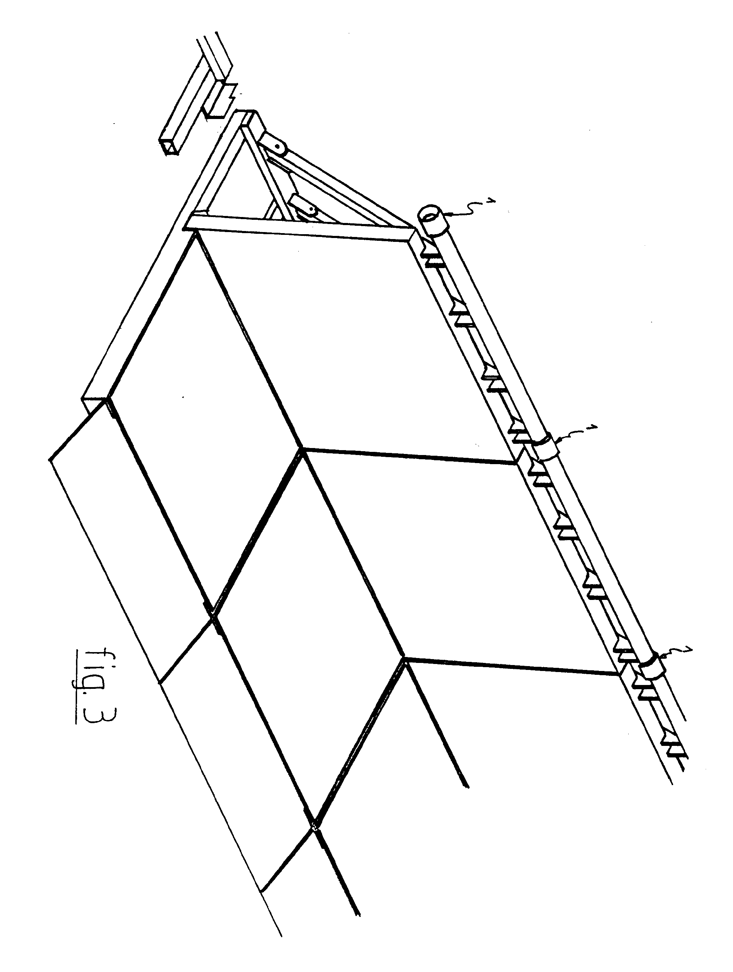

En ce qui concerne l'application de l'invention aux barrières de sécurité mobiles, la figure 3 montre l'aspect du dispositif ainsi assemblé. Chaque barrière est installée à la suite de la précédente, du côté de la tête de vis apparaissant à l'extrémité libre de la barrière qui vient d'être fixée. L'aspect extérieur de la lisse montre à quel point la sécurité est assurée : l'uniformité et la continuation de la barre supérieure sur laquelle s'appuient les spectateurs offrent un maximum de garantie, compte tenu de la résistance offerte par la lisse aux poussées radiales. Les risques d'accident sont inversement diminués, car l'ensemble présente cependant une certaine souplesse permise par le mouvement relatif restreint possible à l'intérieur du manchon. Celui-ci sert donc à préserver en même temps l'alignement, la rigidité et la souplesse de la rampe.

Comme on le voit sur cette figure, le positionnement de chaque élément de barrière est effectué par un emboîtement par sabot, le sens de montage allant de la gauche vers la droite. Il y a impossibilité de démontage si on ne respecte pas le sens adéquat. Ces sabots ont en partie pour fonction de rattraper la composante axiale de l'effort.

Au surplus, on peut remarquer que ces barrières permettent une grande souplesse d'utilisation, dans la mesure où elles autorisent une construction modulaire de barrières sur toute longueur.

**Revendications**

1. Système de liaison et de blocage de tubulures coaxiales comportant un manchon de recouvrement des deux extrémités contigues des tubulures, caractérisé en ce que le manchon (1) est solidarisé à un ensemble d'éléments mobiles en translation rectiligne selon l'axe longitudinal des tubulures comprenant une tige (4) filetée vissée dans un écrou (12) solidaire de la tubulure par le biais d'une rondelle (11) fixée à ladite tubulure, la liaison avec le manchon (1) étant effectuée grâce à une entretoise (3) solidaire dudit manchon (1) et montée libre en rotation autour de la tige filetée (4), et en ce que ledit système comporte un moyen de commande du mouvement et de la position du manchon (1).

2. Système de liaison et de blocage de tubulures coaxiales selon la revendication 1, caractérisé en ce que le moyen de commande du mouvement et de la position du manchon est placé à l'extrémité de la tubulure, à l'intérieur, du côté opposé au manchon.

3. Système de liaison et de blocage de tubulures coaxiales selon l'une quelconque des revendications précédentes, caractérisé en ce que le montage de l'entretoise (3) autour de la vis filetée (4) est réalisé par deux écrous et rondelles homologues (5, 6, 7 et 8) fixés de part et d'autre d'une pièce d'extrémité (9) libre solidaire d'une extrémité de l'entretoise.

4. Système de liaison et de blocage de tubulures coaxiales selon l'une des revendications 1 ou 2, caractérisé en ce que l'entretoise (3) est de section carrée.

5. Application du système selon l'une quelconque des revendications précédentes, caractérisé en ce que les tubulures à manchon mobile sont placées sur des barrières de sécurité transportables afin de constituer une lisse contenue et uniforme capable d'opposer une bonne résistance aux efforts radiaux et démontable élément par élément à partir de la barrière placée à une extrémité de l'ensemble et qui ne se termine pas par un manchon.

**Patentansprüche**

1. System für die Verbindung und die Verriegelung von koaxialen Rohren, mit einer Hülse zur Abdeckung von zwei aneinandergrenzenden Enden der Rohre, dadurch gekennzeichnet, daß die Hülse (1) mit einer Gesamtheit von Elementen verbunden ist, die in Richtung der Längsachse der Rohre geradlinig verschiebbar beweglich sind und eine mit einem Gewinde versehene Stange (4) umfassen, die in eine Mutter (12) eingeschraubt ist, die mit dem Rohr mit einer am Rohr befestigten Scheibe (11) verbunden ist, wobei die Verbindung mit der Hülse (1) mittels eines Abstandsrohrs (3) bewerkstelligt wird, das mit der Hülse (1) verbunden ist und um die mit Gewinde versehene Stange (4) frei drehbar angebracht ist, und daß das System ein Mittel zum Steuern der Bewegung und der Position der Hülse (1) aufweist.

2. System zum Verbinden und Verriegeln von koaxialen Rohren gemäß Anspruch 1, dadurch gekennzeichnet, daß das mittel zum steuern der Bewegung und der Position der Hälse am Ende des Rohrs im Inneren desselben an der der Hülse gegenüberliegenden Seite angeordnet ist.

3. System zum Verbinden und Verriegeln von koaxialen Rohren gemäß einem der vorangehenden Ansprüche, dadurch gekennzeichnet, daß die Anbringung des Abstandsrohrs (3) um die mit Gewinde versehene Stange (4) durch zwei homologe Muttern und Scheiben (5, 6, 7 und 8) verwirklicht ist, die beiderseits eines mit einem Ende des Abstandsrohrs verbundenen freien Endstückes (9) befestigt sind.

4. System zum Verbinden und Verriegeln von koaxialen Rohrstutzen gemäß einem der Ansprüche 1 oder 2, dadurch gekennzeichnet, daß das Abstandsrohr (3) einen quadratischen Querschnitt besitzt.

5. Anwendung des Systems gemäß einem der vorangehenden Ansprüche, dadurch gekennzeichnet, daß die Rohre mit beweglicher Hülse an transportablen Absperrwänden angeordnet sind, um einen ununterbrochenen und gleichmäßigen Handlauf zu ergeben, der radialen Kräften einen guten Widerstand entgegensetzen kann und, beginnend bei der an einem ende der Gesamtheit sich befindenden und nicht mit einer Hülse endenden Wand, elementweise demontierbar ist.

## Claims

1. Means for connecting and immobilising coaxial tubes comprising a sleeve which covers the two contiguous ends of the tubes, characterised in that the sleeve (1) is integral with a set of members which can move linearly along the longitudinal axis of the tubes comprising a threaded rod (4) screwed into a nut (12) which is made integral with the tube by means of a washer (11) fixed to the said tube, the connection with the sleeve (1) being provided by means of a strut (3) which is integral with the said sleeve (1) and mounted so that it is free to rotate about the threaded rod (4) and in that the said system comprises means for controlling the movement and position of the sleeve (1).

2. Means for connecting and immobilising coaxial tubes according to claim 1, characterised in that the means controlling the movement and position of the sleeve is placed at the end of the tube, on the inside, on the side opposite the sleeve.

3. Means for connecting and immobilising coaxial tubes according to any one of the preceding claims, characterised in that the strut (3) is mounted around the threaded screw (4) by means of two similar nuts and washers (5, 6, 7 and 8) fixed on either side of a free end piece (9) which is integral with one end of the strut.

4. Means for connecting and immobilising coaxial tubes according to one of claims 1 or 2, characterised in that the strut (4) is of square cross-section.

5. Application of the means according to any one of the preceding claims, characterised in that the tubes having a moving sleeve are placed on transportable safety barriers so as to form a continuous uniform handrail which is capable of providing good resistance to radial forces and which can be dismantled unit by unit from the barrier placed at one end of the assembly which does not terminate in a sleeve.

fig. 1

fig. 2

fig.3